# EUROPEAN PATENT SPECIFICATION

(11) **EP 1 550 338 B1**
(45) Date of publication and mention of the grant of the patent: **07.05.2008**
(21) Application number: 03755239.5
(22) Date of filing: 28.03.2003
(51) Int. Cl.: H04Q 7/38

(54) **METHOD AND APPARATUS FOR DETERMINING A GEOGRAPHIC LOCATION OF AN ELECTRONIC DEVICE**
VERFAHREN UND VORRICHTUNG ZUR BESTIMMUNG EINES GEOGRAPHISCHEN STANDORTS EINER ELEKTRONISCHEN EINRICHTUNG
PROCEDE ET APPAREIL DE DETERMINATION DE L'EMPLACEMENT GEOGRAPHIQUE D'UN DISPOSITIF ELECTRONIQUE

(30) Priority: 23.05.2002 EP 02405412
(43) Date of publication of application: 06.07.2005
(73) Proprietor: International Business Machines Corporation, Armonk, NY 10504 (US)
(72) Inventor: BINDING, Carl, CH-8803 Rueschlikon (CH); DOLIVO, François, CH-8820 Waedenswil (CH); DYKEMAN, Douglas, CH-8832 Wollerau (CH); HILD, Stefan, G., Somers, NY 10589 (US); KARJOTH, Guenter, CH-8820 Waedenswil (CH); RUETSCHE, Erich, CH-8808 Pfaeffikon (CH)
(74) Representative: Toleti, Martin
(86) International application number: PCT/IB2003/001186
(87) International publication number: WO 2003/101140

(56) References cited:
- US-A1- 2002 006 788
- US-B1- 6 393 294

## Description

### TECHNICAL FIELD

The present invention relates to an electronic device, a server computer, a method for determining a geographic location of an electronic device, a method for supplying data for determining the location of an electronic device, and corresponding computer program products.

### BACKGROUND OF THE INVENTION

Electronic systems allowing remote data access and in particular server/client environments support unlimited worldwide data transfer by means of transfer media like wire bound local area networks, internet or wireless networks.

But there exist requirements, that restrict the general worldwide distribution of data: National laws may require limited access to sensitive data from outside of a country borders. In particular, banking laws may require that access to certain customer data is only permitted from within the borders of the bank's home country.

Copyrights and intellectual property in general are further fields, where unlimited access to sensitive data is to be prevented. Since copyright and intellectual property laws are different from country to country, copyright terms or access to IP rights will vary accordingly, and hence there might be a patent or a copyright assigned in one country but not in another. Hence, data representing copyrights or other IP rights might be subject to sensitive access authorization, which contradicts the unlimited worldwide distribution of data.

Cellular telecommunication networks typically comprise a plurality of base stations, each base station covering a certain area called cell for providing access to the communication network for cellular phones. Once a registered cellular phone having a subscriber identity module (SIM) card requests a call, the corresponding base station handles this call and performs further steps. Knowledge of the base station receiving the call request can be used for detecting piracy and network fraud, as described in WO 99/33309 A1, WO 01/45444 A1 and US 5678669. Furthermore, WO 99/60800 A1 discloses a method of managing a subscriber service in a cellular telecommunication network, and EP 1 173 037 A2 shows a location registration method supporting multiple SIM cards with different functions.

These systems and methods work only with a cellular phone being subject of registration to a certain communication network and with the user of this cellular phone being subscriber of a certain service provider. In general, any location relevant data that may be collected through such methods is not typically being made available outside the particular network. In addition, such data is usually not trusted by parties other than the network operator.

United States Patent US6393294 discloses a method for determining the location of a mobile unit MU in a wireless communication system and presenting it to a remote party. The location of a remote MU is determined by comparing a snapshot of a predetermined portion of the radio frequency spectrum taken by the MU to a reference database containing multiple snapshots taken at various locations. The result of the comparison is used to determine if the MU is at a specific location.

United States Patent Application US2002/0006788 A1 discloses a method and apparatus for providing a range of location dependent information and services to users of wireless devices coupled to a multi-point wireless access network. The network includes wireless access devices, an inventory map and a server. The server correlates each access to the multi-point wireless access network from a corresponding wireless device with the corresponding inventory from the inventoru map to provide location of dependent information and services to the corresponding wireless device.

Accordingly, it would be advantageous to have reliable methods for supplying data for determining a location of an electronic device on the one hand, and for determining a geographic location of an electronic device on the other hand, as well as an appropriate electronic device and a server computer and respective computer program products.

### SUMMARY OF THE INVENTION

According to one aspect of the invention there is provided an electronic device according to claim 1 having a radio receiver, an interface for transmitting data to a remote device, and a control unit for making the radio receiver scan a range of frequencies. The control unit is designed for identifying characteristics of a geographically bound transmission system within the scanned frequencies for determining a geographic location of the electronic device, and for supplying the interface with the characteristics or derivatives thereof.

The identification of geographically bound transmission systems that can be received at the electronic device's location is used to determine its location. According to the invention, location may identify a wide area (states, countries, continents), or may also identify precise geographical positions, say to an accuracy within 50 meters or less. However, the resolution of the location detection according to the invention is typically limited to individual states or countries. Higher resolutions like district location within a country, city locations or even urban district or block locations are included and appreciated, whenever the presence of geographically bound transmission systems allow such a resolution.

Geographically bound transmission systems are preferably embodied as broadcast radio stations or as data or voice communication systems. These geographically bound transmission systems - preferably based on terrestrial transmitters - cover a certain geographical area. While local radio or TV stations cover only small areas, regional or state wide operating audio or TV stations cover wider areas, while other stations operate nationwide. But even if a nationwide operating audio or TV broadcasting station is identified, a smaller location area than country size can be determined, since most of these stations operate on different frequencies in different areas within a country. Dependent on the required location resolution, identifying the characteristics of a single geographically bound system might be sufficient to determine the country the electronic device is located in, for example due to an worldwide exclusively occupied frequency representing a countries network. Typically, identification of characteristics of several geographically bound systems over a range of frequencies allows fine resolved location determination, since a particular pattern of frequencies occupied by geographically bound systems is unique for a certain constraint geographical area. The more frequencies of geographically bound systems are scanned and identified, the more reliable and precise the location can be resolved.

The radio receiver being part of the inventive device comprises at least a tuned circuit, which can be tuned to several frequencies. The receiver does not necessarily needs to have demodulation means since the focus of the invention with regard to the radio receiver is to get a pattern of occupied frequencies. The radio receiver is enabled to scan a range of frequencies. The radio receiver is preferably able to scan frequencies in a broad radio frequency spectrum, such as from 10 kHz to 100 GHz, but this is not a requirement for the invention. The ability of scanning only a very small range of frequencies can suffice, whenever this range supplies enough information for determining the location of the electronic device according to the invention.

The control unit is controlling the radio receiver and evaluating and/or encoding what is delivered from the radio receiver. Therefore, the control unit may comprise a microcomputer with respective software program, or include hardwire logic, or be embodied partly as hardware and partly as software, or be embodied in any other form. Generally, the term control unit is understood rather as a function than as a physical unit.

The range of frequencies to be scanned by the radio receiver can vary: the radio receiver is basically designed and controlled for recording the frequency use in its environment. This may be accomplished by scanning the frequency spectrum across a broad range of frequencies, or by recording signals on particular well-known frequencies. Scanning a range of frequencies according to the invention covers also scanning a single one determined frequency, which might deliver sufficient information with regard to location detection. The radio receiver may further be able to actually detect certain signal patterns on certain radio frequencies it may receive, but again this is not a requirement for the invention. A combination of these methods can be applied sequentially to gain as much information as required.

The control unit identifies location relevant data in a frequency pattern supplied from the radio receiver. It identifies characteristics of one or more geographically bound transmission systems within the scanned frequencies for location determination purposes. The conclusion, that there is no single frequency occupied by any transmission system within the scanned frequencies is also included in the term characteristics and can provide as much information with respect to detecting the device's location as a frequency range covered with frequencies in use. Characteristics are also referred to as spectrum fingerprint. Such characteristics comprise preferably the information of the presence or absence of a signal at a certain frequency for the reasons mentioned above. In another preferred embodiment, the characteristics include a distribution of occupied - or present - frequencies, in case a range of frequencies is scanned. This embodiment supports a precise determination of the device's location.

In a further advantageous embodiment, characteristics include amplitude data in connection with an occupied frequency. Amplitude data in this embodiment is not only considered for presence/absence classification purposes but can be of even more importance for determining the device's location, as amplitude data may be used for gaining a very precise location resolution. Usually an amplitude of an transmitted radio frequency signal has only a certain reach and decreases with increasing distance from the transmitter. Therefore, the identification of a signal amplitude with regard to a certain frequency supports an even more precise determination of the device's location.

In a preferred embodiment, characteristics include an identification code attached to an occupied frequency. The ID code can be embodied as network identifier. These ID codes allow a quick determination of a geographically bound transmission system apart or in addition to identifying frequencies. Therefore signals on one or more frequencies have to be decoded by appropriate decoding or demodulation means, preferably enclosed in the radio receiver.

Characteristics themselves or derivatives thereof - including results of evaluating characteristics, for example area codes characterizing a certain location area -, are transmitted or are encoded first and then transmitted via a device's interface. The interface might have wireless or wire bound properties and include any protocol for data exchange between two electronic devices. Preferably the transmitted data are protected in an appropriate way against modification on transit between the electronic device and the remote device, using signing or encryption methods for example.

A major advantage of the invention is that no further equipment for determining the location of an electronic device apart from the radio receiver is necessary. No fixed set up or other external infrastructure is required. Expenditure is low and location determination is achieved very fast, for example within seconds.

In addition, the location of the electronic device can be detected in outdoor environments as well as in indoor environments, as radio frequencies of geographically bound networks are receivable also indoors. Hence, location detection is very reliable, and - dependent on the amount of identifiable characteristics - very precise.

In a preferred embodiment, the electronic device comprises a database containing characteristics of geographically bound transmission systems of different geographical areas. This feature provides the opportunity to compare the identified characteristics with a plurality of stored characteristics, representing for example frequency patterns of different countries. Preferably, the control unit comprises a matching unit for matching the identified characteristics with the stored characteristics. The matching unit is also referred to as mapper. If the device's location is not self-evident from the fingerprint itself or data contained in the fingerprint, the fingerprint is compared with the database of recorded fingerprints. For each recorded fingerprint, the mapping process is preferably also recorded. It is advantageous to apply a closest match algorithm to the comparison between the identified fingerprint and the stored fingerprint to detect the user's location.

The control unit is preferably enabled for supplying an area code, the area code indicating the one of the stored characteristics, that correspond with the identified characteristics. In this embodiment, determining the location of the electronic device is processed on the device itself, so it is sufficient to transmit an area code as derivative of the identified characteristics representing the device's location. In case processing capacity on the device is limited, the characteristics themselves can be transmitted via the interface.

In another preferred embodiment, the electronic device is portable, being embodied for example as a wireless phone, as a PDA, as a mobile computer or other portable computing device. In case the electronic device is a portable mass product, one of the following hardware adjustments are preferably executed: A modem or network access card is applied for radio receiving purposes. This provides link to some geographically constraint network infrastructure and sufficient higher-level protocol layers to enable the detection of specific network information elements, such as the network identifier of a nearby GSM network. A matching process from characteristics identified by the control unit operating the GSM network card as radio receiver with a GSM country code table results in the determination of a host country, the electronic device is actually located in.

In another preferred embodiment, an electronic device may support more than one of such network access mechanisms. In case that more than one of such access mechanisms is available, each one scans different ranges of frequencies and different geographically bound networks could be identified with these plurality of radio receivers. The availability of characteristics of different geographically bound networks increases the reliability of location detection and might lead to a more precise location area being detected.

According to another aspect of the invention there is provided a server computer according to claim 11, comprising a receiver for receiving characteristics of a geographically bound transmission system from a frequency scanning radio receiver of an electronic device, a database containing characteristics of geographically bound transmission systems of different geographical areas, and a matching unit for matching the received characteristics with the stored characteristics for determining a geographic location of the electronic device.

The server computer is a remote device that the electronic device is communicating with. The server computer can be a fixed computer, containing stored data, to which the electronic device wishes to have access, or it may be implemented separately from the actual data store; in the latter setup, it is however desirable that the data store and the server computer reside within the same trust domain, i.e. that the communications system between the two computers, and the computers themselves, are tamper resistant. According to the invention, the server computer is performing the above mentioned matching process between stored characteristics and characteristics received from the electronic unit. This matching process is preferably performed from the server computer, whenever the electronic device has limited storage means for storing the database. Hence, the electronic device supplies the server computer with the identified characteristics, for example the pattern of occupied frequencies. Finally, the server computer is processing the determining steps and deriving the device's location out of the received characteristics.

In another preferred embodiment, the server computer comprises a control unit being designed for transmitting a request to the electronic device in response to preliminary results of the matching process, such that the request triggers the electronic device's radio receiver to scan an additional range of frequencies. This feature is advantageous for refining the location determination process by interaction between the matching process and the scanning process: For example, a coarse location may be obtained by scanning a rudimentary range of frequencies - for example scanning only a particular frequency and identifying a particular mobile communication system on the particular frequency -, only allowing to determine the country location. The location may then be refined by taking additional measurements and identifying for example the signal strength. In a distributed client/server system described above, the control unit of the server computer is processing the matching of characteristics and therefore decides to request further frequency scanning steps or identifying further characteristics of an already measured range of frequencies.

This feature can be applied to the above mentioned electronic device in an analogous way, in case the matching process is performed on the electronic device.

In a preferred embodiment, the server computer comprises an access authorization unit for giving access to server data dependent on the determined geographic location. This feature deals with using the results of the location determination process. It is a feature of this embodiment that even if no location information can be derived for whatever reason - be it that the electronic's device is outside the range of any transmission system or is shielded from such transmission systems -, this may be useful input to the access authorization unit; for example the access authorization unit might question the user for additional authorization information or may deny access rights. Thus, the server computer gives access or denies access to data requested from the electronic device. For example, access to data can be denied to teleworking banking staff, who try to connect from outside a countries borders, and thus violating banking laws, that allow access to customer data exclusively from inside a bank's home country borders. Or, users may be denied access to copyrighted material where the distribution of said material is limited to certain geographical areas (i.e. Certain television broadcasts or movies that can only be distributed in certain areas).

In another embodiment, the server computer preferably comprises a selection unit for selecting or computing data dependent on the determined geographic location. Applications are today commonplace that transmit server data to a client in a location specific manner, i.e. that data is strongly tied to the location of that client. Examples are flight or train connections starting from airports or stations in the particular area where the user and his/her electronic device is located in. These data items can be transmitted from the server computer to the user without making the user type his/her actual location in the electronic device. Location information is further advantageous for giving the user of the electronic device information about restaurants, hairstylists, shopping facilities, etc. within a certain distance from the user's location.

Basically, the invention can be used with all applications, where access to data is dependent not only on an identity of a user but on the user's current geographical location, or where information is personalized to a particular location.

According to another aspect of the invention, a method according to claim 14 is claimed for determining a geographic location of an electronic device, comprising receiving characteristics of a geographically bound transmission system using a frequency scanning radio receiver of an electronic device, matching the received characteristics with stored characteristics of geographically bound transmission systems of different geographical areas, and determining a geographic location of the electronic device dependent on a result of the matching process.

In a preferred embodiment, the electronic device is requested for further frequency scanning for refining the determination of the electronic device's geographic location.

According to another aspect of the invention, a method according to claim 16 is claimed for supplying data for determining the location of an electronic device, comprising scanning a range of radio frequencies at the electronic device's location, identifying characteristics of a geographically bound transmission system within the scanned frequencies, and supplying the characteristics or derivatives thereof for location determination purposes.

In a preferred embodiment characteristics of a broadcasting station are identified.

In another preferred embodiment, characteristics of a data or a voice communication system are identified.

According to another aspect of the invention, a computer program product according to claim 19 is provided having computer readable program code, executable by a digital processing unit to perform a method comprising receiving characteristics of a geographically bound transmission system using a frequency scanning radio receiver of an electronic device, matching the received characteristics with stored characteristics of geographically bound transmission systems of different geographical areas, and determining a geographic location of the electronic device dependent on a result of the matching process.

According to another aspect of the invention, a computer program product according to claim 20 is provided having computer readable program code, executable by a digital processing unit of an electronic device to perform a method comprising scanning a range of radio frequencies, identifying characteristics of a geographically bound transmission system within the scanned frequencies, and supplying the characteristics or derivatives thereof for location determination purposes.

Advantages with regard to the above mentioned methods, computer program products and their embodiments correspond to the advantages of the inventive devices and respective embodiments described above.

### BRIEF DESCRIPTION OF THE DRAWINGS

The invention and its embodiments will be more fully appreciated by reference to the following detailed description of presently preferred but nonetheless illustrative embodiments in accordance with the present invention when taken in conjunction with the accompanying drawings.

The figures are illustrating:
FIG. 1 a combined block and flow chart in accordance with the present invention,
FIG. 2 a first frequency pattern as a result of a first scanning process in accordance with the present invention,
FIG. 3 a second frequency pattern as a result of a second scanning process in accordance with the present invention,
FIG. 4 symbolic characteristics in accordance with the present invention,
FIG. 5 a first block diagram in accordance with the present invention, and
FIG. 6 a second block diagram in accordance with the present invention.

Different figures may contain identical references, representing elements with similar or uniform content.

### DETAILED DESCRIPTION OF THE DRAWINGS

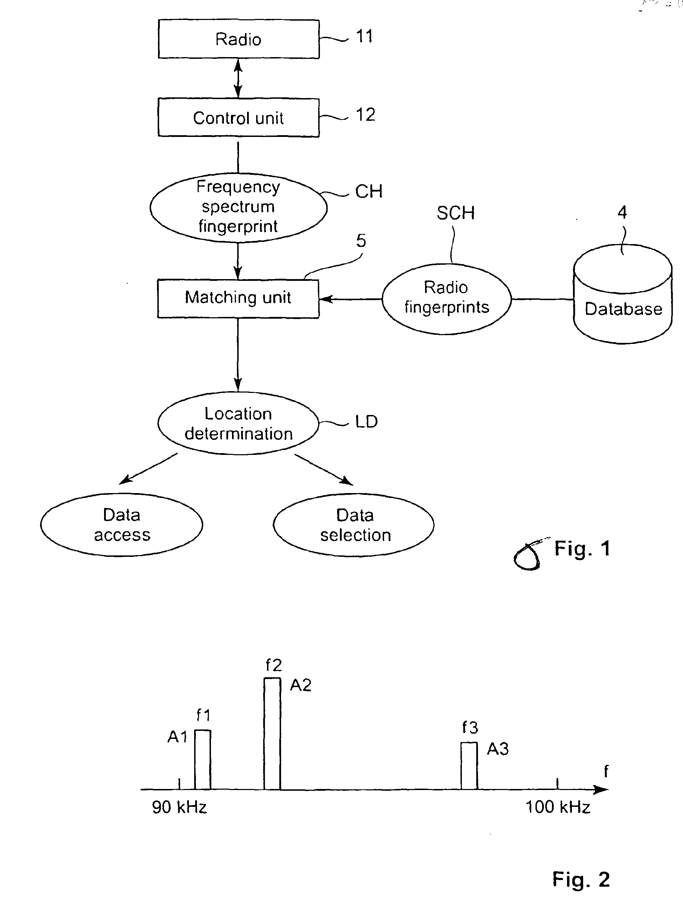

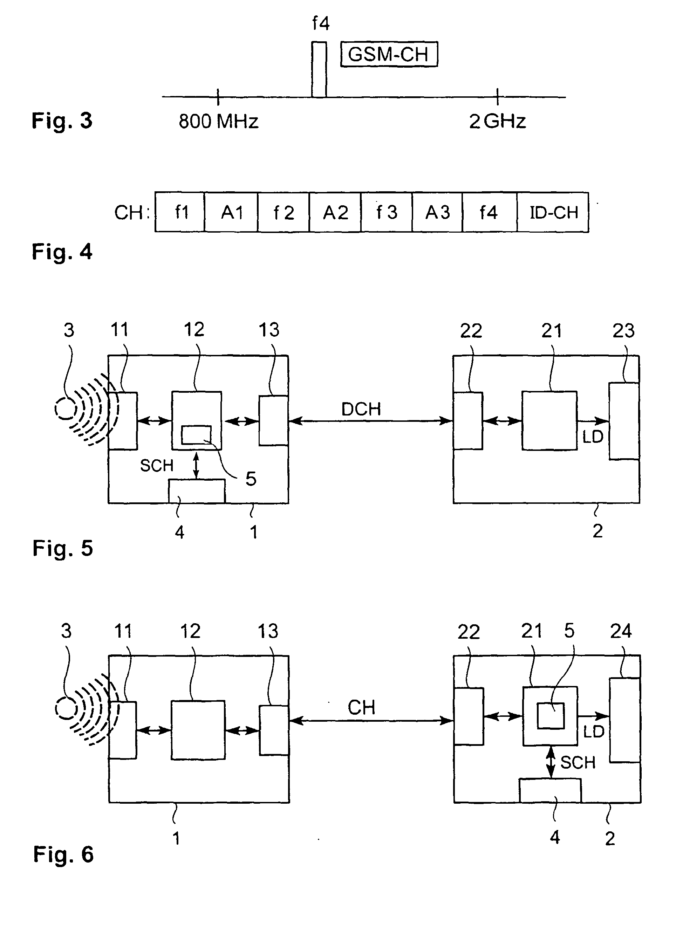

FIG. 1 shows a combined block and flow chart in accordance with the present invention. This chart basically shows preferred methods according to the invention and introduces apparatus elements, represented by rectangles. Possible assignments of the illustrated elements to an electronic device and/or to a server computer will be subject of the description in conjunction with FIG. 5 and FIG. 6.

A control unit 12 determines a range of frequencies a radio receiver 11 has to scan. The radio receiver 11 is controlled by the control unit 12 and supplies the control unit 12 with a frequency pattern. The control unit 12 identifies characteristics CH - also called frequency spectrum fingerprint - of geographically bound transmission systems within the scanned frequencies.

A matching unit 5 matches the characteristics CH with stored characteristics SCH - also called radio fingerprints - of geographically bound transmission systems of different geographical areas, stored in a database 4.

Applying a closest match algorithm, a single one of the stored characteristics SCH matches with the actual received characteristics CH. These particular stored characteristics SCH represent a transmission system image of a certain area. Accordingly, this particular area defines the location of an electronic device, this electronic device comprising the radio receiver 11. In the end, the location is determined as a result of the matching process. The determined location LD can be used in data systems for granting or denying access or for selecting data in dependence on the determined location LD.

FIG. 2 shows a first frequency pattern as a result of a first scanning process. The radio receiver was advised to scan a range of frequencies from 90 kHz to 110 kHz and supplied a frequency scanning response according to FIG. 2. The control unit 12 identifies characteristics of geographically bound networks appearing in the scanned frequencies. Frequencies f1, f2 and f3 are occupied from radio broadcasting stations. The reach of each of the transmitters is different, so the characteristics f1, f2, and f3 represent a particular location of the radio receiver and accordingly the electronic device. At this location, signals of all these three transmitting networks can be reached, with respective signal strengths A1, A2 and A3. The identification and collection of location relevant data within the scanned frequencies is called fingerprint or characteristics.

Another range of scanned frequencies from 800 MHz to 2 GHz is shown in FIG. 3. This range is scanned under control of the control unit 12 by an appropriate radio receiver. The range is scanned straight after the first frequency range according to FIG. 2 has been scanned, or after a first location approach was performed with the characteristics resulting from FIG. 2 to refine the determination of the location.

Within this second range of frequencies, at a frequency f4 a GSM communication network is identified by demodulating signals at this frequency f4 and detecting a GSM header identifying the GSM network for example as a certain swiss GSM network. This characteristics allow further precise determination of the device's location.

The identified characteristics CH within this two ranges of frequencies are collected and shown in FIG. 4, identifying the frequencies and amplitudes of occupied frequencies in the first range, and identifying the frequency and the GSM header of the occupied frequency in the second range. These characteristics are supplied for further matching processes, in case these characteristics are not leading to a location determination immediately due to significance.

FIG. 4 shows a first block diagram in accordance with the present invention. An electronic device 1, whose location is of particular interest, includes a radio receiver 11, a control unit 12, an interface 13, a database 4 and a matching unit 5. The electronic device 1 is connected with a remote server computer 2, including a receiver 22, a control unit 21 and an authorization unit 23.

The way of determining the location of the electronic device 1 conforms to FIG. 1. The device's control unit 12 makes the radio receiver I 1 scan a range of frequencies. Within this range, geographically bound transmission systems 3 can be detected and their characterizing parameters identified by the control unit 12. These characteristics CH are matched with stored characteristics SCH according to FIG. 1 by means of the matching unit 5. The results, for example the location determination itself, is sent as derivative characteristics DCH to the receiver 22 of the server computer 2. The location determination LD is input to the authorization unit 23, which controls access to requested data in dependence on the determined location LD.

The block diagram according to FIG. 5 shows another example of the present invention, where in contrast to the system of FIG. 4 matching unit 5 and database 4 are disposed in the server computer 2. Matching processes and location determination processes are performed now at the server computer 2, while the electronic unit 1 transmits the identified characteristics to the servers receiver 22. Instead of an authorization unit 23 a selection unit 24 is provided in the server computer 2 for selecting data dependent on the determined location LD.

## Claims

1. An electronic device, comprising
• a radio receiver (11),
• an interface (13) for transmitting data to a remote device,
• a control unit (12) for making the radio receiver (11) scan a range of frequencies,
• said control unit (12) being designed for
• identifying characteristics (CH) of a geographically bound transmission system (3) within said scanned frequencies for determining a geographic location (LD) of said electronic device (1),
• supplying said interface (13) with said characteristics (CH) or derivatives thereof (DCH); the electronic device **characterized by**
• requesting access to server data from a server computer (2),
• receiving from said server computer (2) authorization to access said server data, the authorization being dependent on said determined geographic location (LD).

2. The electronic device according to claim 1,
wherein said geographically bound transmission system (3) includes a broadcasting station.

3. The electronic device according to claim 1 or claim 2,
wherein said geographically bound transmission systems (3) includes a data or voice communication system.

4. The electronic device according to one of the preceding claims,
wherein said characteristics (CH) include a distribution of occupied frequencies.

5. The electronic device according to one of the preceding claims,
wherein said characteristics (CH) include amplitude data in connection with an occupied frequency.

6. The electronic device according to one of the preceding claims,
wherein said characteristics (CH) include an identification code attached to an occupied frequency.

7. The electronic device according to one of the preceding claims,
comprising a database (4) containing characteristics (SCH) of geographically bound transmission systems of different geographical areas.

8. The electronic device according to claim 7,
wherein said control unit (12) comprises a matching unit (5) for matching said identified characteristics (CH) with said stored characteristics (SCH).

9. The electronic device according to claim 8,
wherein said control unit (12) is enabled for supplying an area code, said area code indicating the one of said stored characteristics (SCH), that correspond with the identified characteristics (CH).

10. The electronic device according to one of the preceding claims,
being a portable electronic device.

11. A server computer, comprising
• a receiver (22) for receiving characteristics (CH) of a geographically bound transmission system (3) from a frequency scanning radio receiver (11) of an electronic device (1),
• a database (4) containing characteristics (SCH) of geographically bound transmission systems of different geographical areas; the server coomputer **characterised by**;
• a matching unit (5) for matching said received characteristics (CH) with said stored characteristics (SCH) for determining a geographic location (LD) of said electronic device, and
• an access authorization unit (23) for giving authorization to access requested server data, said authorization being dependent on said determined geographic location (LD).

12. The server computer according to claim 11,
comprising a control unit (21) being enabled for transmitting a request to said electronic device in dependence on a result of said matching process, said request making said electronic device's radio receiver (11) an additional range of frequencies.

13. The server computer according to claim 11 or claim 12,
comprising a selection unit (24) for selecting or computing data dependent on said determined geographic location (LD).

14. Method for determining a geographic location of an electronic device, comprising
• receiving characteristics (CH) of a geographically bound transmission system (3) using a frequency scanning radio receiver (11) of an electronic device (1); the method **characterized by**;
• matching said received characteristics (CH) with stored characteristics (SCH) of geographically bound transmission systems of different geographical areas,
• determining a geographic location (LD) of said electronic device (1) dependent on a result of said matching process, and
• giving authorization to access requested server data, said authorization being dependent on said determined geographic location (LD).

15. Method according to claim 14,
wherein said electronic device (1) is requested for further frequency scanning for refining the determination of said electronic device's geographic location.

16. Method for supplying data for determining the location of an electronic device,
comprising
• scanning a range of radio frequencies at the electronic device's location,
• identifying characteristics (CH) of a geographically bound transmission system (3) within said scanned frequencies, and
• supplying said characteristics (CH) or derivatives (DCH) thereof for location determination purposes to a server computer (2), the method **characterized by**;
• requesting access to server data from a server computer (2),
• receiving from said server computer (2) authorization to access said server data, said authorization being dependent on said determined geographic location (LD).

17. Method according to claim 16,
wherein characteristics (CH) of a broadcasting station are identified.

18. Method according to claim 16,
wherein characteristics (CH) of a data or a voice communication system are identified.

19. A computer program product having computer readable program code, executable by a digital processing unit to perform a method comprising:
• receiving characteristics (CH) of a geographically bound transmission system (3) using a frequency scanning radio receiver (11) of an electronic device (1); the method **characterized by**;
• matching said received characteristics (CH) with stored characteristics (SCH) of geographically bound transmission systems (3) of different geographical areas,
• determining a geographic location (LD) of said electronic device dependent on a result of said matching process, and
• giving authorization to access requested server data, said authorization being dependent on said determined geographic location (LD).

20. A computer program product having computer readable program code, executable by a digital processing unit of an electronic device to perform a method comprising:
• scanning a range of radio frequencies,
• identifying characteristics (CH) of a geographically bound transmission system (3) within said scanned frequencies, and
• supplying said characteristics (CH) or derivatives (DCH) thereof for location determination purposes; the method **characterized by**;
• requesting access to server data from a server computer (2),
• receiving from said server computer (2) authorization to access said server data, said authorization being dependent on said determined geographic location (LD).

## Patentansprüche

1. Elektronische Einrichtung, die Folgendes umfasst:
• einen Funkempfänger (11),
• eine Schnittstelle (13) zur Übertragung von Daten an eine ferne Einheit,
• eine Steuereinheit (12), die den Funkempfänger (11) zum Durchsuchen eines Frequenzbereichs veranlasst,
• wobei die Steuereinheit (12) konzipiert wurde zum
• Identifizieren von Merkmalen (CH) eines geographisch gebundenen Übertragungssystems (3) innerhalb der durchsuchten Frequenzen, um einen geographischen Standort (LD) der elektronischen Einrichtung (1) zu bestimmen,
• Liefern der Merkmale (CH) oder der von diesen abgeleiteten Merkmale (DCH) an die Schnittstelle (13); wobei die elektronische Einrichtung **gekennzeichnet ist durch**
• Anfordern des Zugriffs auf Serverdaten von einem Server-Computer (2),
• Empfangen der Autorisierung von dem Server-Computer (2) für den Zugriff auf die Serverdaten, wobei die Autorisierung von dem bestimmten geographischen Standort (LD) abhängt.

2. Elektronische Einrichtung nach Anspruch 1,
wobei das geographisch gebundene Übertragungssystem (3) eine Rundfunkstation einschließt.

3. Elektronische Einrichtung nach Anspruch 1 oder Anspruch 2,
wobei das geographisch gebundene Übertragungssystem (3) ein Daten- oder Sprachübertragungssystem einschließt.

4. Elektronische Einrichtung nach einem der vorhergehenden Ansprüche,
wobei die Merkmale (CH) eine Verteilung belegter Frequenzen einschließen.

5. Elektronische Einrichtung nach einem der vorhergehenden Ansprüche,
wobei die Merkmale (CH) Amplitudendaten in Verbindung mit einer belegten Frequenz einschließen.

6. Elektronische Einrichtung nach einem der vorhergehenden Ansprüche,
wobei die Merkmale (CH) einen Identifikationscode in Verbindung mit einer belegten Frequenz einschließen.

7. Elektronische Einrichtung nach einem der vorhergehenden Ansprüche,
die eine Datenbank (4) umfasst, die Merkmale (SCH) geographisch gebundener Übertragungssysteme verschiedener geographischer Gebiete enthält.

8. Elektronische Einrichtung nach Anspruch 7,
wobei die Steuereinheit (12) eine Abgleicheinheit (5) zum Abgleichen der identifizierten Merkmale (CH) mit den gespeicherten Merkmalen (SCH) umfasst.

9. Elektronische Einrichtung nach Anspruch 8,
wobei die Steuereinheit (12) zur Lieferung einer Bereichskennzahl aktiviert wird, wobei die Bereichskennzahl diejenigen der gespeicherten Merkmale (SCH) angibt, die den identifizierten Merkmalen (CH) entsprechen.

10. Elektronische Einrichtung nach einem der vorhergehenden Ansprüche, wobei es sich um eine tragbare elektronische Einrichtung handelt.

11. Server-Computer, der Folgendes umfasst:
• einen Empfänger (22) zum Empfangen von Merkmalen (CH) eines geographisch gebundenen Übertragungssystems (3) von einem Frequenzen durchsuchenden Funkempfänger (11) einer elektronischen Einrichtung (1),
• eine Datenbank (4), die Merkmale (SCH) geographisch gebundener Übertragungssysteme verschiedener geographischer Gebiete enthält; wobei der Server-Computer **gekennzeichnet ist durch**
• eine Abgleicheinheit (5) zum Abgleichen der empfangenen Merkmale (CH) mit den gespeicherten Merkmalen (SCH), um einen geographischen Standort (LD) der elektronischen Einrichtung zu bestimmen, und
• eine Zugriffsautorisierungseinheit (23) zur Autorisierung des Zugriffs auf angeforderte Serverdaten, wobei die Autorisierung von dem bestimmten geographischen Standort (LD) abhängt.

12. Server-Computer nach Anspruch 11,
der eine Steuereinheit (21) umfasst, die aktiviert wird, um in Abhängigkeit von einem Ergebnis des Abgleichprozesses eine Anforderung an die elektronische Einrichtung zu übertragen, wobei die Anforderung den Funkempfänger (11) der elektronischen Einrichtung zum Durchsuchen eines zusätzlichen Frequenzbereichs veranlasst.

13. Server-Computer nach Anspruch 11 oder Anspruch 12,
der eine Auswahleinheit (24) zur Auswahl oder Berechnung von Daten in Abhängigkeit von dem bestimmten geographischen Standort (LD) umfasst.

14. Verfahren zur Bestimmung eines geographischen Standorts einer elektronischen Einrichtung, das Folgendes umfasst:
• Empfangen von Merkmalen (CH) eines geographisch gebundenen Übertragungssystems (3) mit Hilfe eines Frequenzen durchsuchenden Funkempfängers (11) einer elektronischen Einrichtung (1); wobei das Verfahren **gekennzeichnet ist durch**
• Abgleichen der empfangenen Merkmale (CH) mit gespeicherten Merkmalen (SCH) geographisch gebundener Übertragungssysteme verschiedener geographischer Gebiete,
• Bestimmen eines geographischen Standorts (LD) der elektronischen Einrichtung (1) in Abhängigkeit von einem Ergebnis des Abgleichprozesses und
• Autorisieren des Zugriffs auf angeforderte Serverdaten, wobei die Autorisierung von dem bestimmten geographischen Standort (LD) abhängt.

15. Verfahren nach Anspruch 14,
wobei die elektronische Einrichtung (1) zur weiteren Frequenzdurchsuchung aufgefordert wird, um die Bestimmung des geographischen Standorts der elektronischen Einrichtung zu optimieren.

16. Verfahren zur Lieferung von Daten zur Bestimmung des Standorts einer elektronischen Einrichtung, das Folgendes umfasst:
• Durchsuchen eines Funkfrequenzbereichs am Standort der elektronischen Einrichtung,
• Identifizieren von Merkmalen (CH) eines geographisch gebundenen Übertragungssystems (3) innerhalb der durchsuchten Frequenzen und
• Liefern der Merkmale (CH) oder der von diesen abgeleiteten Merkmale (DCH) zum Zwecke der Standortbestimmung an einen Server-Computer (2), wobei das Verfahren **gekennzeichnet ist durch**
• Anfordern des Zugriffs auf Serverdaten von einem Server-Computer (2),
• Empfangen der Autorisierung von dem Server-Computer (2) für den Zugriff auf die Serverdaten, wobei die Autorisierung von dem bestimmten geographischen Standort (LD) abhängt.

17. Verfahren nach Anspruch 16,
wobei Merkmale (CH) einer Rundfunkstation identifiziert werden.

18. Verfahren nach Anspruch 16,
wobei Merkmale (CH) eines Daten- oder Sprachübertragungssystems identifiziert werden.

19. Computerprogrammprodukt mit computerlesbarem Programmcode, der von einer digitalen Verarbeitungseinheit zur Anwendung eines Verfahrens ausgeführt werden kann, das Folgendes umfasst:
• Empfangen von Merkmalen (CH) eines geographisch gebundenen Übertragungssystems (3) mit Hilfe eines Frequenzen durchsuchenden Funkempfängers (11) einer elektronischen Einrichtung (1); wobei das Verfahren **gekennzeichnet ist durch**
• Abgleichen der empfangenen Merkmale (CH) mit gespeicherten Merkmalen (SCH) geographisch gebundener Übertragungssysteme (3) verschiedener geographischer Gebiete,
• Bestimmen eines geographischen Standorts (LD) der elektronischen Einrichtung in Abhängigkeit von einem Ergebnis des Abgleichprozesses und
• Autorisieren des Zugriffs auf angeforderte Serverdaten, wobei die Autorisierung von dem bestimmten geographischen Standort (LD) abhängt.

20. Computerprogrammprodukt mit computerlesbarem Programmcode, der von einer digitalen Verarbeitungseinheit einer elektronischen Einrichtung zur Anwendung eines Verfahrens ausgeführt werden kann, das Folgendes umfasst:
• Durchsuchen eines Funkfrequenzbereichs,
• Identifizieren von Merkmalen (CH) eines geographisch gebundenen Übertragungssystems (3) innerhalb der durchsuchten Frequenzen und
• Liefern der Merkmale (CH) oder der von diesen abgeleiteten Merkmale (DCH) zum Zwecke der Standortbestimmung, wobei das Verfahren **gekennzeichnet ist durch**
• Anfordern des Zugriffs auf Serverdaten von einem Server-Computer (2),
• Empfangen einer Autorisierung von dem Server-Computer (2) für den Zugriff auf die Serverdaten, wobei die Autorisierung von dem bestimmten geographischen Standort (LD) abhängt.

## Revendications

1. Un dispositif électronique, comprenant :
· un récepteur radio (11),
· une interface (13) pour transmission de données à un dispositif distant,
· une unité de commande (12) pour que le récepteur radio (11) explore une plage de fréquences,
· ladite unité de commande (12) étant conçue pour :
· identifier des caractéristiques (CH) d'un système de transmission lié géographiquement (3) dans lesdites fréquences explorées afin de déterminer un emplacement géographique (LD) dudit dispositif électronique (1),
· fournir à ladite interface (13) lesdites caractéristiques (CH) ou de dérivés (DCH) de celles-ci ; le dispositif électronique étant **caractérisé par**
· le fait de demander l'accès à des données de serveur depuis un ordinateur serveur (2),
· recevoir dudit ordinateur serveur (2) une autorisation d'accès auxdites données de serveur, l'autorisation dépendant dudit emplacement géographique (LD) ayant été déterminé.

2. Le dispositif électronique selon la revendication 1, dans lequel ledit système de transmission lié géographiquement (3) comprend une station d'émission.

3. Le dispositif électronique selon la revendication 1 ou 2, dans lequel ledit système de transmission lié géographiquement (3) comprend un système de communication de données ou de voix.

4. Le dispositif électronique selon l'une des revendications précédentes, dans lequel lesdites caractéristiques (CH) comprennent une distribution des fréquences occupées.

5. Le dispositif électronique selon l'une des revendications précédentes, dans lequel lesdites caractéristiques (CH) comprennent des données d'amplitude en liaison avec une fréquence occupée.

6. Le dispositif électronique selon l'une des revendications précédentes, dans lequel lesdites caractéristiques (CH) comprennent un code d'identification attaché à une fréquence occupée.

7. Le dispositif électronique selon l'une des revendications précédentes, comprenant une base de données (4) contenant des caractéristiques (SCH) de systèmes de transmission liés géographiquement de différentes zones géographiques.

8. Le dispositif électronique selon la revendication 7, dans lequel ladite unité de commande (12) comprend une unité de coïncidence (5), pour faire coïncider lesdites caractéristiques identifiées (CH) avec lesdites caractéristiques stockées (SCH).

9. Le dispositif électronique selon la revendication 8, dans lequel ladite unité de commande (12) est activée pour fournir un code de zone, ledit code de zone indiquant celle desdites caractéristiques stockées (SCH) qui correspond aux caractéristiques identifiées (CH).

10. Le dispositif électronique selon l'une des revendications précédentes, étant un dispositif électronique portable.

11. Un ordinateur serveur, comprenant :
· un récepteur (22) pour recevoir des caractéristiques (CH) d'un système de transmission à liaison géographique (3), depuis un récepteur radio (11), explorant les fréquences, d'un dispositif électronique (1),
· une base de données (4) contenant des caractéristiques (SCH) de systèmes de transmission à liaison géographique de différentes zones géographiques ; l'ordinateur serveur étant **caractérisé par** ;
· une unité de coïncidence (5) pour faire coïncider lesdites caractéristiques reçues (CH) avec lesdites caractéristiques stockées (SCH), afin de déterminer un emplacement géographique (LD) dudit dispositif électronique, et
· une unité d'autorisation d'accès (23), pour fournir une autorisation auxdites données de serveur pour lesquelles l'accès est demandé, ladite autorisation dépendant dudit emplacement géographique (LD) déterminé.

12. L'ordinateur serveur selon la revendication 11, comprenant une unité de commande (21) activée pour transmettre une requête audit dispositif électronique selon un résultat dudit processus de coïncidence, ladite requête faisant dudit récepteur radio (11) du dispositif électronique une plage de fréquence additionnelle.

13. L'ordinateur serveur selon la revendication 11 ou la revendication 12, comprenant une unité de sélection (24) pour sélectionner ou calculer des données selon ledit emplacement géographique (LD) déterminé.

14. Procédé de détermination d'un emplacement géographique d'un dispositif électronique, comprenant :
· la réception de caractéristiques (CH) d'un système de transmission à liaison géographique (3) en utilisant un récepteur radio (11) à exploration de fréquence d'un dispositif électronique (1) ; le procédé étant **caractérisé par** :
· la coïncidence entre lesdites caractéristiques reçues (CH) et les caractéristiques stockées (SCH) des systèmes de transmission à liaison géographique de différentes zones géographiques,
· la détermination d'un emplacement géographique (LD) dudit dispositif électronique (1) selon un résultat dudit processus de coïncidence, et
· la fourniture d'une autorisation à accéder aux données de serveur demandées, ladite autorisation dépendant dudit emplacement géographique (LD) ayant été déterminé.

15. Procédé selon la revendication 14, dans lequel ledit dispositif électronique (1) se voit demander une exploration de fréquence supplémentaire, pour affiner la détermination de l'emplacement géographique dudit dispositif électronique.

16. Procédé de fourniture de données pour déterminer l'emplacement d'un dispositif électronique, comprenant :
· l'exploration d'une plage de fréquences radio à l'emplacement du dispositif électronique,
· l'identification de caractéristiques (CH) d'un système de transmission à liaison géographique (3) dans lesdites fréquences explorées, et
· la fourniture desdites caractéristiques (CH) ou des dérivés (DCH) de celles-ci à des fins de détermination d'emplacement, à un ordinateur serveur (2), le procédé étant **caractérisé par** ;
· la demande d'accès aux données serveur depuis un ordinateur serveur (2),
· la réception depuis ledit ordinateur serveur (2) d'une autorisation à accéder auxdites données de serveur, ladite autorisation dépendant dudit emplacement géographique (LD) déterminé.

17. Procédé selon la revendication 16, dans lequel des caractéristiques (CH) d'une station d'émission sont identifiées.

18. Procédé selon la revendication 16, dans lequel des caractéristiques (CH) d'un système de communication de données ou de voix sont identifiées.

19. Un produit de programme pour ordinateur comprenant un code de programme lisible par ordinateur, exécutable par une unité de traitement numérique pour mettre en oeuvre un procédé, comprenant :
· la réception des caractéristiques (CH) d'un système de transmission de liaison géographique (3) en utilisant un récepteur radio à balayage de fréquence (11) d'un dispositif électronique (1) ; le procédé étant **caractérisé par** :
· la coïncidence desdites caractéristiques reçues (CH) avec une caractéristique stockée (SCH) de systèmes de transmission à liaison géographique (3) de zones géographiques différentes,
· la détermination d'un emplacement géographique (LD) dudit dispositif électronique, selon le résultat dudit processus de coïncidence, et
· la fourniture d'une autorisation à accéder à des données de serveur demandées, ladite autorisation dépendant dudit emplacement géographique (LD) ayant été déterminé.

20. Un produit de programme pour ordinateur ayant un code de programme lisible par ordinateur, exécutable par une unité de traitement numérique d'un dispositif électronique pour mettre en oeuvre un procédé, comprenant :
· l'exploration d'une plage de fréquences radio,
· l'identification des caractéristiques (CH) d'un système de transmission à liaison géographique (3) dans lesdites fréquences explorées, et
· la fourniture desdites caractéristiques (CH) ou de leurs dérivés (DCH) à des fins de détermination d'emplacement, le procédé étant **caractérisé par** :
· la demande d'accès à des données serveur, depuis un ordinateur serveur (2),
· la réception, de la part dudit ordinateur serveur (2), d'une autorisation à accéder auxdites données de serveur, ladite autorisation dépendant dudit emplacement géographique (LD) déterminé.
